(19) Europäisches Patentamt
European Patent Office
Office européen des brevets

(11) **EP 3 656 049 B1**

(12) **EUROPÄISCHE PATENTSCHRIFT**

(45) Veröffentlichungstag und Bekanntmachung des Hinweises auf die Patenterteilung:
**28.02.2024 Patentblatt 2024/09**

(21) Anmeldenummer: **18779230.4**

(22) Anmeldetag: **13.09.2018**

(51) Internationale Patentklassifikation (IPC):
*H02P 21/05* (2006.01)      *H02P 21/14* (2016.01)
*H02P 21/04* (2006.01)      *H02P 21/18* (2016.01)
*H02P 21/34* (2016.01)      *H02P 25/089* (2016.01)
*H02P 21/13* (2006.01)

(52) Gemeinsame Patentklassifikation (CPC):
**H02P 21/05; H02P 21/04; H02P 21/13; H02P 21/141; H02P 21/18; H02P 21/34; H02P 25/089**

(86) Internationale Anmeldenummer:
**PCT/EP2018/074708**

(87) Internationale Veröffentlichungsnummer:
**WO 2019/057596 (28.03.2019 Gazette 2019/13)**

(54) **ÜBERWACHUNGSEINRICHTUNG FÜR EINE RELUKTANZMASCHINE UND VERFAHREN ZUR ÜBERWACHUNG**

MONITORING DEVICE FOR A RELUCTANCE MACHINE AND METHOD FOR MONITORING

DISPOSITIF DE SURVEILLANCE POUR UNE MACHINE À RÉLUCTANCE, MACHINE À RÉLUCTANCE ET PROCÉDÉ DE SURVEILLANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.09.2017 EP 17192677**

(43) Veröffentlichungstag der Anmeldung:
**27.05.2020 Patentblatt 2020/22**

(73) Patentinhaber: **Siemens Aktiengesellschaft**
**80333 München (DE)**

(72) Erfinder:
• **SINNER, Harald**
**90542 Eckental/Eckenhaid (DE)**
• **WEIGEL, Thilo**
**90427 Nürnberg (DE)**

(74) Vertreter: **Siemens Patent Attorneys**
**Postfach 22 16 34**
**80506 München (DE)**

(56) Entgegenhaltungen:
DE-A1-102006 008 497      DE-A1-102013 212 876
US-A1- 2007 001 635      US-A1- 2017 237 376

**Beschreibung**

Überwachungseinrichtung für eine Reluktanzmaschine und Verfahren zur Überwachung.

Die Erfindung betrifft eine Reluktanzmaschine und deren Überwachung. Eine synchrone Reluktanzmaschine kann gesteuert oder geregelt betrieben werden.

Reluktanzmaschinen gibt es als Reluktanzmotor bzw. als Reluktanzgenerator. Zur Bestimmung der Position des Rotors (auch Läufer genannt) der Reluktanzmaschine kann ein Geber verwendet werden. Die Reluktanzmaschine kann aber auch geberlos betrieben werden.

Zur Bestimmung der Position des Rotors bei einer elektrischen Maschine kann beispielsweise auch eine feldorientierte Regelung herangezogen werden.

Aus der DE 197 03 248 A1 sind ein Verfahren und eine Vorrichtung zur Bestimmung einer Rotorwinkelgeschwindigkeit einer geberlosen, feldorientiert betriebenen Drehfeldmaschine bekannt.

Aus der EP 2 023 479 B1 ist ein System zur nahtlosen Geschwindigkeits- und/oder Lageermittlung einschließlich Stillstand bei einem Permanentmagnet-Läufer einer elektrischen Maschine bekannt. Es ist ein Verfahren zur Ermittlung einer elektrischen Antriebs-Geschwindigkeit und/oder -Lage aus einer Messung eines mehrphasigen Statorstroms beschrieben.

Aus der EP 2 226 929 A1 ist ein Plausibilitäts-Überwachungssystem für Bewegungsmessungen an einer elektrischen Antriebseinrichtung bekannt. Bei einem Verfahren zur Überwachung einer Bewegungsmessung an einer elektrischen Antriebseinrichtung auf Plausibilität wird die Bewegungsmessung eines Gebers überwacht. Anhand von Messungen von elektrischen Strömen in der Antriebseinrichtung werden ein oder mehrere Schätzwerte für die Lage, Geschwindigkeit und/oder Beschleunigung der Antriebseinrichtung erzeugt, wobei der oder die Schätzwerte auf Entsprechung mit einem oder mehreren, aus den Geber-Ausgangssignalen erzeugten Messwerten verglichen werden.

Aus der DE 10 2013 212 876 A1 ist ein Verfahren zum Ermitteln einer Läuferlage einer rotatorischen, mehrphasigen, elektronisch kommutierten elektrischen Maschine bekannt, wobei die elektrische Maschine mehrere Phasenleitungen aufweist, die über Phasenanschlüsse bestrombar sind. Ein Reinzeigerwinkel des bezüglich des statorfesten kartesischen Koordinatensystems bereitgestellten Spannungszeigers der induzierten Spannung wird rechnerisch um einen geschätzten Wert der Läuferlage rotiert, wobei der rotierte Spannungszeiger tiefpassgefiltert wird, wobei basierend auf einer Winkellage des tiefpassgefilterten rotierten Spannungszeigers der induzierten Spannung der geschätzte Wert der Läuferlage für den darauffolgenden Berechnungszyklus bestimmt wird.

Aus der US 2017/237376 A1 ist eine Motorsteuerung bekannt, welche einen Wechselrichter mit Verschaltungen aufweist, die einen Motor mit Strom versorgt. Eine Steuerung mit Verschaltungen steuert den Wechselrichter so, dass die Schaltung des Wechselrichters einen AC Strom an eine erste Achse eines stationären orthogonalen Koordinatensystems im Motor liefert, während die Frequenz des AB Stroms verändert wird. Die erste Achse hat eine vorbestimmte Phasenbeziehung mit einer Phasenspannung des Motors.

Aus der DE 10 2006 008 497 A1 ist ein Anlassfehlererkennungssystem bekannt, welches auf Basis eines Flussamplitudensignalwerts eine Anzeige eines Motoranlassfehlers bereitstellt. Das Flussamplitudensignal wird aus Schätzungen des Motorflusses in Verbindung mit einer Läuferwinkelschätzung abgeleitet. Der Flussamplitudensignalwert wird mit einem oberen und unteren Schwellenwert verglichen, und ein Anlassfehler wird angezeigt, wenn der Flussamplitudensignalwert außerhalb des Bereichs liegt, der vom oberen und unteren Schwellenwert festgelegt wird. Das Motorbetriebssystem kann so eingestellt werden, dass ein Wiederanlassen versucht wird, wenn ein Anlassfehler des Motorbetriebs erkannt wird, wobei der Wiederanlassstrom, die Dauer und die Gesamtzahl der Wiederanlassversuche benutzereinstellbar sind.

Aus der US 2007/001635 A1 ist ein Motorantriebssystem für einen sensorlosen Motor umfassend eine Fangstartsequenziereinrichtung bekannt, die das Motorantriebssystem steuert, um den Motor robust zu starten, falls sich der Rotor vor dem Aktivieren des Motorantriebssystems in Vorwärts- oder Rückwärtsrichtung dreht.

Eine Reluktanzmaschine, insbesondere ein synchrone Reluktanzmaschine, kann in einem geberlosen Betrieb eingesetzt werden. In dieser Betriebsart, dem geberlosen Betrieb, kann die Reluktanzmaschine gesteuert betrieben werden. Im gesteuerten Betrieb wird ein parametrierter Strom eingeprägt. Im gesteuerten Betrieb wird insbesondere ein Bereich niedriger Ausgangsfrequenzen durchfahren. Der Strom wird insbesondere so eingestellt, dass ein erwartetes Moment aufgebracht bzw. erzeugt werden kann. Ist die Amplitude des Stromes zu klein, wird der Rotor nicht wie gewünscht beschleunigt und der Reluktanzmotor kippt bzw. blockiert. Der Stromzeiger dreht sich über den Rotor und erzeugt beim Überstreichen der Drehmomentachse wechselweise ein positives und negatives Moment. Dies wird als "Rattern" wahrgenommen. Die Drehzahl bleibt im Mittel Null; der Rotor der Reluktanzmaschine, bzw. eine Welle, welche mit dem Rotor verbunden ist, blockiert also.

Eine Aufgabe der Erfindung ist es eine Reluktanzmaschine sicher zu betreiben.

Eine Lösung der Aufgabe ergibt sich bei einer Überwachungseinrichtung für einen Reluktanzmaschine nach Anspruch 1 bzw. bei einem Verfahren zur Überwachung einer Reluktanzmaschine nach Anspruch 2. Jeweilige Ausgestaltungen ergeben sich nach den Ansprüchen 3 bis 4.

Um ein "Rattern" im gesteuerten Betrieb zu vermeiden, kann eine Varianz des Strombetrages überwacht werden. Der Stromregler des Reluktanzmaschine kann allerdings bei kleinen Frequenzen die entstehenden Harmonischen (insbesondere die 2-fache Ständerfrequenz) gut ausregeln. Deswegen kann die Überwachung noch verbessert werden.

Im geregelten Betrieb kann die Differenz aus Soll- und Istfluss überwacht werden und so der Rotor überwacht werden. Auch durch Verwendung eines Gebers kann das Blockieren (Rattern) des Rotors, bzw. das Blockieren einer mit dem Rotor verbundenen Welle, erkannt werden.

Um ein Blockieren (Rattern) der Reluktanzmaschine bzw. des Rotors der Reluktanzmaschine zu erkennen gibt es eine weitere Möglichkeit. Dies betrifft insbesondere den gesteuerten Betrieb der Reluktanzmaschine.

Der Reluktanzmaschine ist ein Stromrichter zugeordnet. Zur Regelung und/oder Steuerung der Reluktanzmaschine ist eine feldorientierte Regelung/Steuerung bzw. ein Stromregler vorgesehen. Diese können zur Überwachung der Reluktanzmaschine mit herangezogen werden. Dreht ein Stromzeiger über eine stehende Welle, entsteht nach der folgenden Formel ein Flussanteil durch den komplexen und den konjugiert komplexen Stromzeiger:

$$\underline{\Psi} = \Psi_d + j\Psi_q$$

$$\underline{\Psi} = (L_\Sigma \underline{I} + L_\Delta \cdot \underline{I}^*)$$

$$L_\Sigma = 0.5 \cdot (L_d + L_q)$$

$$L_\Delta = 0.5 \cdot (L_d - L_q)$$

mit:

    $\Psi$ für den Fluss (magnetischen Fluss)
    d für eine d-Komponente
    q für eine q-Komponente
    L für die Induktivität

Eine Komponente des Flusses $\underline{\Psi}$ dreht somit mit positiver Grundfrequenz $f_{FUND}$ und eine mit negativer Grundfrequenz $f_{FUND}$. Die Grundfrequenz ist die Frequenz des Stromzeigers.

Es werden elektrische Frequenzen (ständerbezogen) betrachtet. Die Frequenz des Flusses wird mit der Polpaarzahl auf die Ständerseite transformiert. Um den gewünschten Stromzeiger einzuregeln erzeugt der Stromregler einen Spannungszeiger, der einen Anteil mit negativ drehender Grundfrequenz erzeugt. Durch ein Transformieren des Raumzeigers in ein Koordinatensystem, das mit negativer Grundfrequenz dreht, werden alle Frequenzanteile um die Grundfrequenz verschoben. Der durch den konjugiert komplexen Strom entstehende Anteil wird damit zu einem Gleichanteil. Dieser Gleichanteil kann mit einem Tiefpass aus dem Signal (Gesamtsignal) gefiltert werden und zur Detektion der blockierten Welle verwendet werden. Hieraus ergibt sich folglich eine weitere Möglichkeit der Überwachung der Reluktanzmaschine.

Der im Fehlerfall (Rattern) auftretende und mit negativer Frequenz drehende Spannungsanteil wird somit durch die Transformation in ein mit negativer Frequenz drehendes Koordinatensystem auf die Frequenznulllinie verschoben und wird somit zum Gleichgrößensignal. Der mit positiver Frequenz drehende und die Maschine antreibende Grundwellenanteil der Spannung wird durch die Koordinatentransformation auf die Linie der doppelten Grundfrequenz verschoben. Mittels des Tiefpasses kann der Pegel der Frequenznulllinie vom Pegel der doppelten Grundfrequenzlinie getrennt werden. Am Ausgang des Tiefpasses erscheint somit im Fehlerfall ein stationäres Gleichgrößensignal.

Eine Überwachungseinrichtung für eine Reluktanzmaschine, weist einem Vektordreher zur Drehung eines von der Spannung abhängigen Raumzeigers, einen Tiefpassfilter für den gedrehten Raumzeiger und eine Signalauswertung für das Ausgangssignal des Tiefpassfilters auf. Mittels dieser Überwachungseinrichtung kann eine stehende (ratternde) Welle bzw. Rotor erkannt werden. Der von der Spannung abhängige Raumzeiger kann beispielsweise der Spannungszeiger sein, oder der Raumzeiger für den Fluss. Der Raumzeiger für den Fluss ist vom Spannungszeiger abgeleitet. Der Flusszeiger ist das Integral des Spannungszeigers. Der Spannungszeiger ist die Ableitung des Flusszeigers.

In der Überwachungseinrichtung ist durch den Vektordreher der Raumzeiger in ein mit negativer Grundfrequenz drehendes Koordinatensystem gedreht.

In der Überwachungseinrichtung ist der Vektordreher ausgebildet um den Raumzeiger um eine negative Grundfrequenz zu drehen. So kann ermittelt werden, ob es einen Gleichanteil gibt. Die positive Grundfrequenz ist die Frequenz des vorgegebenen Stromzeigers (eingeprägter Strom).

In der Überwachungseinrichtung ist der Raumzeiger ein Spannungszeiger. Der Spannungszeiger korrespondiert mit dem Flusszeiger. Der Raumzeiger kann alternativ also auch der Flusszeiger sein.

In der Überwachungseinrichtung weist die Signalauswertung einen Betragsbildner und einen Schwellwertvergleicher auf. Durch den Tiefpass lässt sich ein Gleichanteil ermitteln. Von diesem Gleichanteil des Raumzeigers, welcher den Fluss oder die Spannung betrifft, wird der Betrag gebildet. Der Betrag kann dann mit einem Schwellwert verglichen werden. Ist der Betrag über dem Schwellwert wird ein Fehler erkannt. Es wird also ein Blockieren (Rattern) der Welle (des Rotors) erkannt.

Das Blockieren (Rattern) der Welle kann im Gegensatz zu einer Überwachung der Varianz des Stromes im ganzen Drehzahlbereich erkannt werden. Durch eine geeignete Fehlermeldung kann ein Betreiber der Reluktanzmaschine schneller auf eine fehlerhafte Parametrierung aufmerksam gemacht werden (z.B. auf einen zu geringen Anfahrstrom für den gesteuerten Betrieb).

Bei einem Verfahren zur Überwachung einer Reluktanzmaschine wird ein Raumzeiger für den Fluss, welcher von der Spannung abhängig ist, in einer mit negativer Frequenz drehendes Koordinatensystem transformiert und in diesem als stationäres Gleichgrößensignal überwacht. Das Gleichgrößensignal ist demnach eine Gleichgröße und/oder ein Gleichanteil eines Signals.

Nach dem Verfahren kann demnach aus dem Fluss, d. h. aus dem entsprechenden Zeiger, ein Gleichanteil detektiert werden. Da der Fluss von der Spannung abhängig ist ergibt sich demnach der Gleichanteil auch auf der Spannung. So kann der Gleichstromanteil des Raumzeigers für den Fluss mittels eines Tiefpassfilters aus eine Signalauswertung ermittelt bzw. überwacht werden. Der Einsatz eines Tiefpassfilters ist bereits obig geschrieben.

Bei einem Verfahren zur Überwachung einer Reluktanzmaschine kann also ein Raumzeiger für den Fluss bzw. für eine Spannung überwacht werden. Der Raumzeiger wird um eine Grundfrequenz transformiert. Die Transformation erfolgt insbesondere um die negative Grundfrequenz. Die Grundfrequenz entspricht insbesondere der vorgegebenen Drehzahl der Reluktanzmaschine. Dabei wird der Gleichanteil des transformierten Raumzeigers überwacht. Im regulären Betrieb ist dieser Gleichanteil Null bzw. nahezu Null. Der Gleichanteil erhöht sich, wenn der Rotor blockiert bzw. rattert.

Es wird nach der Transformation (insbesondere durchgeführt durch einen Vektordreher) der unter Umständen (also im Fall eines Blockierens bzw. Ratterns) vorhandene Gleichanteil mittels eines Tiefpasses erzeugt bzw. ermittelt.

Es wird der Gleichanteil mit einem Schwellwert verglichen und eine Fehlermeldung ausgegeben, wenn der Gleichanteil des vektortransformierten Raumzeigers den Schwellwert erreicht und/oder überschreitet. Hierfür kann in einer Ausgestaltung auch zusätzlich eine Hysterese verwendet werden.

In einer Ausgestaltung des Verfahrens wird die Reluktanzmaschine mit der Überwachung als geberlose Reluktanzmaschine betrieben. So kann ein sicherer Betrieb der Reluktanzmaschine kostengünstig ohne Geber erreicht werden.

In einer Ausgestaltung des Verfahrens wird die Reluktanzmaschine in einem gesteuerten Betrieb betrieben. Damit kann auch das Anfahren der Reluktanzmaschine sicher durchgeführt werden.

Die Erfindung sowie weitere Ausgestaltungen der Erfindung werden im Folgenden anhand von Ausführungsbeispielen in den Figuren näher erläutert. Es zeigen:

FIG 1    einen Blechschnitt eines Rotors einer Reluktanzmaschine;

FIG 2    eine Reluktanzmaschine mit einem Stromregler;

FIG 3    ein Zeigerdiagramm im Normalbetrieb;

FIG 4    ein Zeigerdiagramm im Fehlerfall (Blockieren bzw. Rattern des Rotors bzw. der Welle) und

FIG 5    eine Überwachungseinrichtung.

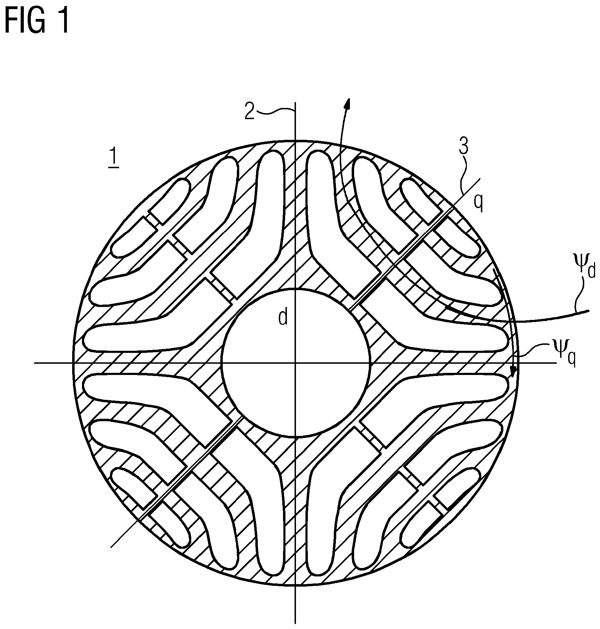

Die Darstellung nach FIG 1 zeigt einen Rotorblechschnitt 1 einer Reluktanzmaschine. Gezeigt ist ferner ein Pol 2 und eine Pollücke 3 zusammen mit den Achsen d und q des Flusses auf Grundlage der Park-Transformation. Die d-Achse betrifft den flussbildenden Anteil und die q-Achse betrifft den momentenbildenden Anteil des gesamten Flusses. Der Rotorblechschnitt 1 ist ein typisches exemplarisches Beispiel für einen Rotor einer Reluktanzmaschine. Neben dem Pol 2 und der Lücke 3, welche entsprechend die d-Achse und die q-Achse darstellen, ist auch der Fluss $\Psi_d$ und der Fluss $\Psi_q$ dargestellt.

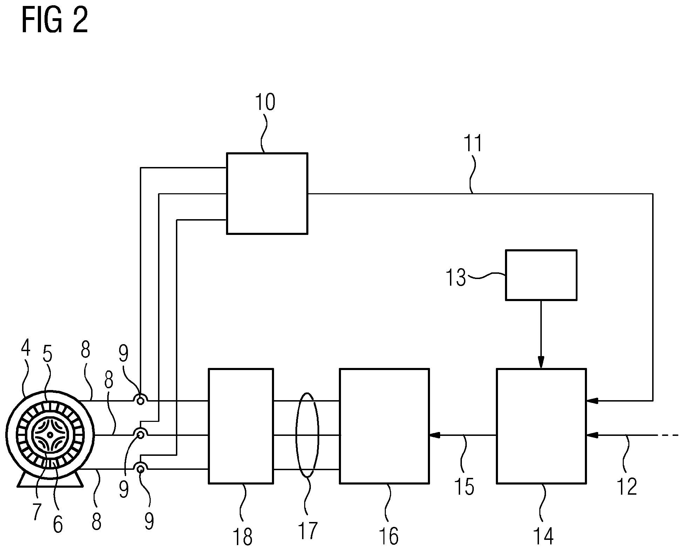

Die Darstellung nach FIG 2 zeigt eine Reluktanzmaschine 4 mit einem Stromregler 14. Damit ergibt sich ein vereinfachtes Blockschaltbild der Regelung der Reluktanzmaschine 4. Die Reluktanzmaschine 4 weist einen Stator 5 mit Statornuten 6 auf, in welchen Statorwicklungen eingefügt sind. Gezeigt ist ferner ein Rotor 7, dessen Blechschnitt angedeutet ist. Die Reluktanzmaschine 4 weist einen dreiphasigen Stromanschluss 8 auf. Zur Messung eines Stromes bzw. einer Spannung für die Phasen des Stromanschlusses 8 ist ein dreiphasiger Messwertaufnehmer 9 vorgesehen. Die aufgenommenen Messwerte werden in einer Istwertverarbeitung 10 verarbeitet. Die Istwertverarbeitung 10 ergibt einen Stromistwert $\underline{I}$ aus. Dieser Stromistwert $\underline{I}$ ist ein Eingangswert des Stromreglers 14. Ein weiterer Eingangswert des Stromreglers 14 ist der Stromsollwert $\underline{I}_{soll}$ 12. Zudem weist der Stromregler 14 eine Verknüpfung mit einem Motormodell 13 auf. Ein Ausgangswert des Stromreglers 14 ist der Spannungssollwert U 15. Der Spannungssollwert U 15 ist eine Eingangsgröße einer Wechselrichtersteuerung 16. Die Wechselrichtersteuerung 16 hat als Ausgangsgrößen Ansteuersignale 17, welche einem Wechselrichter 18 zugeführt sind. Der Wechselrichter 18 dient der Speisung der Reluktanzmaschine 14 mit elektrischer Energie.

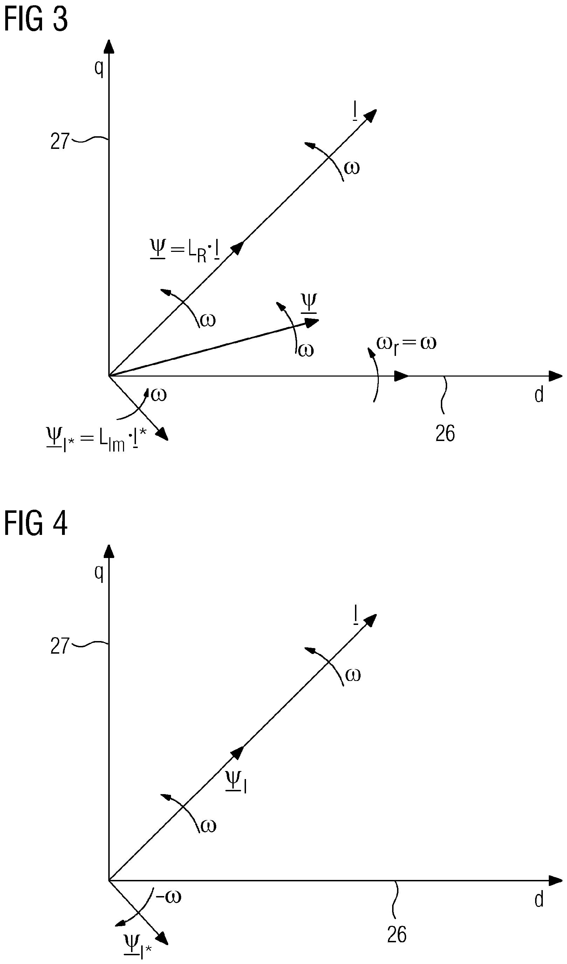

Die Darstellung nach FIG 3 zeigt ein Zeigerdiagramm für die Reluktanzmaschine, wobei im Zeigerdiagramm die Spannungszeiger nicht extra dargestellt sind. Der Spannungszeiger ergibt sich aus der zeitlichen Ableitung des Flusses und ist um 90° zum Flusszeiger verdreht. Das Zeigerdiagramm basiert auf der Darstellung der d-Achse 26 und der q-Achse 27. Dargestellt sind der Stromzeiger $\underline{I}$, der Fluss $\Psi_I$, der Fluss $\Psi$ und der Fluss $\Psi_I^*$. Die Raumzeiger bewegen sich, wie dargestellt, mit der elektrischen Rotorwinkelgeschwindigkeit $\omega_r$. Bezüg-

lich der dargestellten Werte ergeben sich folgende Gleichungen:

$$\omega_r = \omega$$

$$\Psi_I = L_R \cdot \underline{I}$$

$$\Psi_I^* = L_{Im} \cdot \underline{I}^*$$

Die Darstellung nach FIG 3 zeigt das Zeigerdiagramm der Reluktanzmaschine im bestimmungsgemäßen Betrieb. In einem Betriebszustand der Reluktanzmaschine nach FIG 3 ergibt sich kein Rattern bzw. Blockieren des Rotors. Unter Zugrundelegung der Gleichungen

$$\underline{\Psi} = \Psi_d + j\Psi_q$$

$$\underline{\Psi} = (L_\Sigma \underline{I} + L_\Delta \cdot \underline{I}^*)$$

$$L_\Sigma = 0.5 \cdot (L_d + L_q)$$

$$L_\Delta = 0.5 \cdot (L_d - L_q)$$

erschließt sich, dass sich die d-Achse mit dreht, wie auch der konjugiert komplexe Anteil des Flusses.

Die Darstellung nach FIG 4 zeigt ein weiteres Zeigerdiagramm mit den Achsen d 26 und q 27. Dargestellt ist ferner der Stromzeiger I mit der Winkelgeschwindigkeit ω und der auf diesem verlaufende Zeiger $\underline{\Psi}_I$ sowie der dazu um -ω verschobene Zeiger $\underline{\Psi}_I^*$. Im Unterschied zu der Darstellung nach FIG 3 zeigt die Darstellung nach FIG 4 nicht einen normalen Betriebszustand, sondern den Fehlerfall, bei welchem die Welle bzw. der Rotor blockiert ist, also rattert. Der Flusszeiger $\underline{\Psi}_I$ rotiert mit der Winkelgeschwindigkeit ω. Der Zeiger $\underline{\Psi}_I^*$ rotiert mit der Winkelgeschwindigkeit -ω. Damit rotieren die Zeiger $\underline{\Psi}_I$ und $\underline{\Psi}_I^*$ in entgegengesetzte Richtungen. Hieraus ergibt sich ein Gleichanteil, welcher detektiert werden kann.

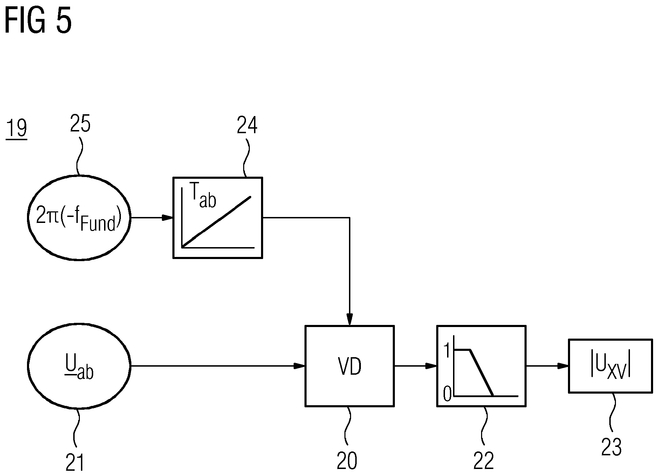

Die Darstellung nach FIG 5 zeigt eine Überwachungseinrichtung 19. Die Überwachungseinrichtung 19 dient der Überwachung der Reluktanzmaschine. Die Überwachungseinrichtung weist Eingangssignale 21 und 25 auf. Das Eingangssignal 21 ist ein Raumzeiger, insbesondere ein statorfester Spannungszeiger $\underline{U}_{ab}$ (Klemmenspannung des Motors). Das Eingangssignal 25 ist eine negative Kreisfrequenz $2\pi(-f_{Fund})$. Dabei ist die Grundfrequenz $f_{Fund}$ durch das negative Vorzeichen negiert. Die negative Kreisfrequenz 25 wird mittels einer Abtastung mit der Abtastfrequenz $T_{ab}$ abgetastet. Für einen Vektordreher 20 erfolgt mittels einer Winkelintegration 24 eine Integration des Eingangssignals 25 über die Abtastzeit. Das Ausgangssignal des Winkelintegrators 24 wird dem Vektordreher 20 zugeführt, welcher den Raumzeiger 21 dreht. Der mit der negativen Kreisfrequenz gedrehte Raumzeiger 21 wird durch einen Tiefpassfilter 22 geführt. Das Ausgangssignal des Tiefpassfilters 22 wird in einer Signalauswertung 23 weiter verarbeitet. Die Signalauswertung 23 ist beispielsweise ein Betragsbildner, wobei im vorliegenden Fall eine Betragsbildung der Komponenten des Spannungszeigers $|U_{xv}|$ im drehenden Koordinatensystem durchgeführt wird. Im Fehlerfall dreht sich die Komponente $L_\Sigma I$ wie im Normalfall stets mit positiver Richtung. Die Komponenten $L_\Delta I^*$ dreht sich im Fehlerfall mit negativer Richtung. Im Normalfall dreht die Komponente $L_\Delta I^*$ auch mit positiver Frequenz um. Es ist also so, dass im Fehlerfall wie im Normalfall die Komponente $L_\Sigma I$ in positiver Frequenz (Drehrichtung) dreht, die konjugierte Komponente $L_\Delta I^*$ im Normalfall mit positiver Richtung dreht, im Fehlerfall jedoch die Drehrichtung ändert und in negativer Richtung dreht.

## Patentansprüche

1. Überwachungseinrichtung (19) für eine Reluktanzmaschine (4), mit einem Vektordreher (20) zur Drehung eines von der Spannung abhängigen Raumzeigers (21 für den Fluss der Reluktanzmaschine (4), mit einem Tiefpassfilter (22) für den gedrehten Raumzeiger (21) und einer Signalauswertung (23) für das Ausgangssignal des Tiefpassfilters (22), **dadurch gekennzeichnet, dass** durch den Vektordreher (20) der Raumzeiger (21) in ein mit negativer Grundfrequenz drehendes Koordinatensystem gedreht ist, wobei der Raumzeiger (21) ein Spannungszeiger ist, wobei mittels des Tiefpassfilters (22) ein Gleichanteil ermittelbar ist, wobei die Signalauswertung (23) einen Betragsbildner und einen Schwellwertvergleicher aufweist.

2. Verfahren zur Überwachung einer Reluktanzmaschine (4), wobei eine Überwachungseinrichtung (19) nach Anspruch 1 verwendet wird.

3. Verfahren nach Anspruch 2, wobei die Reluktanzmaschine (4) geberlos betrieben wird.

4. Verfahren nach Anspruch 2 oder 3, wobei die Reluktanzmaschine (4) in einem gesteuerten Betrieb betrieben wird.

## Claims

1. Monitoring device (19) for a reluctance machine (4), with a vector rotator (20) for rotating a space phasor (21) for the flux of the reluctance machine (4) dependent upon the voltage, with a low-pass filter (22) for the rotated space phasor (21) and a signal evaluation (23) for the output signal of the low-pass filter (22), **characterised in that** the space phasor (21) is rotated by the vector rotator (20) into a coordinate system which rotates with negative fundamental frequency, wherein the space phasor (21) is a voltage phasor, wherein a DC component can be ascertained by means of the low-pass filter (22), wherein the signal evaluation (23) has an absolute-value generator and a threshold comparator.

2. Method for monitoring a reluctance machine (4), wherein a monitoring device (19) according to claim 1 is used.

3. Method according to claim 2, wherein the reluctance machine (4) is operated without an encoder.

4. Method according to claim 2 or 3, wherein the reluctance machine (4) is operated in an open-loop controlled operation.

**Revendications**

1. Dispositif (19) de contrôle d'une machine (4) à réluctance comprenant un tourneur (20) de vecteur pour faire tourner un vecteur (21) d'espace, qui dépend de la tension, du flux de la machine (4) à réluctance, comprenant un filtre (22) passe-bas pour le vecteur (21) d'espace tourné et une analyse (23) de signal pour le signal de sortie du filtre (22) passe-bas, **caractérisé en ce que**, par le tourneur (20) de vecteur, le vecteur (21) d'espace est tourné dans un système de coordonnées tournant à une fréquence de base négative, dans lequel le vecteur (21) d'espace est un vecteur de tension, dans lequel au moyen du filtre (22) passe-bas une composante continue peut être déterminée, dans lequel l'analyse (23) du signal a un formeur de valeur absolue et un comparateur de valeur de seuil.

2. Procédé de contrôle d'une machine (4) à réluctance, dans lequel on utilise un dispositif (19) de contrôle suivant la revendication 1.

3. Procédé suivant la revendication 2, dans lequel on fait fonctionner la machine (4) à réluctance sans capteur.

4. Procédé suivant la revendication 2 ou 3, dans lequel on fait fonctionner la machine (4) à réluctance dans un fonctionnement commandé.

FIG 1

...

FIG 2

FIG 3

$$\underline{\Psi} = L_R \cdot \underline{I}$$

$$\underline{\Psi}_{I*} = L_{Im} \cdot \underline{I}^*$$

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19703248 A1
- EP 2023479 B1
- EP 2226929 A1
- DE 102013212876 A1
- US 2017237376 A1
- DE 102006008497 A1
- US 2007001635 A1